# FASCICULE DE BREVET EUROPEEN

(11) **EP 0 876 863 B1**
(45) Date de publication et mention de la délivrance du brevet: **18.09.2002**
(21) Numéro de dépôt: 98400718.7
(22) Date de dépôt: 26.03.1998
(51) Int. Cl.: B21D 53/10, B21D 22/10, B21D 22/24

(54) **Procédé de fabrication de bagues de roulement et dispositif d'outil correspondant**
Wälzlagerlaufringe-Herstellungsverfahren und entsprechende Werkzeugeinrichtung
Bearing race ring manufacturing process and correspoding tool arrangement

(30) Priorité: 10.04.1997 FR 9704414
(43) Date de publication de la demande: 11.11.1998
(73) Titulaire: SKF FRANCE, F-92142 Clamart Cédex (FR)
(72) Inventeur: Coquelin, Jean-Philippe, 37100 Tours (FR)
(74) Mandataire: Casalonga, Axel

(56) Documents cités:
- CH-A- 662 293
- DE-A- 19 513 668
- DE-C- 19 600 755
- US-A- 2 177 303
- US-A- 3 667 097

## Description

La présente invention concerne la fabrication de bagues de roulement en tôle, plus particulièrement la fabrication de bagues comprenant deux rétreints radiaux disposés axialement de part et d'autre d'une partie de plus grande dimension radiale, par exemple des bagues intérieures tournantes de butées d'embrayage qui comportent une partie centrale sensiblement tubulaire se prolongeant à une extrémité par un rétreint présentant en section axiale méridienne un profil concave en forme d'arc de cercle destiné à constituer un chemin de roulement circulaire pour des éléments roulants, tels que des billes, et à l'autre extrémité par un retour radial bombé dirigé vers l'intérieur, formant la surface d'attaque destinée à venir en contact avec les extrémités des doigts d'un diaphragme de mécanisme d'embrayage.

De telles bagues sont déjà connues et utilisées dans des butées d'embrayage. Leur fabrication se fait généralement en trois étapes principales :
- réalisation d'une ébauche de bague lui conférant sa géométrie de base,
- traitement thermique pour donner à la bague la dureté requise,
- rodage de la gorge formant chemin de roulement, précédé ou non d'une opération de rectification pour donner à la gorge sa microgéométrie et son état de surface.

La fabrication en grandes séries des ébauches de telles bagues se fait par des moyens faisant principalement appel à des opérations de découpe et d'emboutissage d'un feuillard de tôle sur des presses transfert multipostes complétées éventuellement par des opérations de reprise de forme avec enlèvement de copeaux.

Une des difficultés à résoudre pour la fabrication de tels types d'ébauches de bagues réside dans le fait que la partie cylindrique comporte à une de ses extrémités un rétreint et à l'autre extrémité un repli vers l'intérieur. Cela pose problème si on utilise des techniques d'emboutissage dans lesquelles les outils se déplacent axialement par rapport à la bague. Lorsque le rétreint ou le repli est formé à l'une des extrémités de la partie cylindrique, il vient gêner le passage d'outil ou de matrice pour l'emboutissage de l'autre repli ou rétreint.

La fabrication d'une ébauche de bague intérieure de butée d'embrayage à partir d'un feuillard en tôle en travaillant uniquement à la presse, nécessite au minimum onze opérations :
- découpe du flan de tôle,
- préformage et ajourage du trou de centrage servant à centrer la pièce sur les postes successifs de la presse transfert,
- estampage à plat d'une rainure de repli,
- emboutissage,
- détourage,
- préformage du chemin de roulement,
- mise en forme et calibrage de la partie cylindrique,
- défonçage,
- formage du chemin de roulement,
- préformage de la surface d'attaque,
- formage de la surface d'attaque.

Onze jeux d'outillage comprenant une matrice et un poinçon sont ainsi nécessaires pour équiper les différents postes. Par ailleurs, les presses tranfert multipostes étant généralement limitées à huit postes, il faut utiliser deux presses pour ce travail, ce qui implique des coûts supplémentaires de montage et de réglage des machines et de la manutention. Enfin, on est obligé de réaliser une rainure de repli afin que la matière puisse de replier à l'endroit voulu ce qui fragilise la pièce. La forme prise par le raccord entre la partie cylindrique et la surface d'attaque n'est pas toujours d'une parfaite correction géométrique dans la mesure où la matrice ne peut s'étendre radialement jusqu'à la partie cylindrique du fait de la présence du rétreint du chemin de roulement qui est déjà formé.

Il est également connu d'utiliser un procédé de fabrication mixte utilisant des opérations de découpe-emboutissage à la presse complétées par des opérations de reprise. Ce mode opératoire comporte au minimum onze opérations.
- découpe du flan,
- emboutissage,
- découpage du trou de centrage du fond,
- formage du chemin de roulement,
- détourage,
- mise en forme de la partie cylindrique avec deux portions d'épaisseur différente,
- défonçage,
- préformage de la surface d'attaque,
- formage de la surface d'attaque,
- rectification du chemin de roulement et des diamètres,
- mise à longueur par tournage ou rectification.

Ce procédé de fabrication est relativement onéreux puisqu'il exige de travailler à deux presses et de reprendre ensuite les pièces en rectification et tournage du fait du manque de précision dans la géométrie des pièces obtenues par emboutissage. De plus, on est obligé de réaliser une portion cylindrique à épaisseur réduite pour pouvoir replier convenablement la tôle. Ce procédé implique, en raison de ce qui précède, de travailler à partir d'un feuillard de tôle légèrement plus épais ce qui accroît le coût matière.

Le document US-A-2 177 303, considéré comme représentant l'état de la technique le plus proche, décrit un procédé de fabrication d'une bague destiné à un pallier à roulement à partir d'un élément circulaire comprenant une partie cylindrique et un fond radial. Les différentes formes intermédiaires de cette bague sont décrites sur les Figures 2 à 5 de ce document.

La présente invention a pour objet de remédier aux inconvénients des procédés évoqués ci-dessus et de proposer un procédé simple et économique, ne mettant en oeuvre qu'une seule presse transfert grâce à un nombre réduit d'opérations.

La présente invention a également pour objet un dispositif d'outil pour presse d'emboutissage destiné à former des bagues de roulement.

Le procédé de fabrication, selon l'invention, est prévu pour une bague du type destinée à un palier à roulement, comprenant deux rétreints radiaux axialement décalés. La fabrication est effectuée à partir d'un élément circulaire comprenant une partie cylindrique, un fond radial et une partie destinée à former le second rétreint radial. Le procédé comprend les étapes de maintien du fond radial, de maintien de l'alésage de la partie cylindrique à l'aide d'un outil radialement expansible, de formation et de calibrage sur la surface extérieure de la partie destinée à former le second rétreint radial, d'une déformation radialement vers l'intérieur.

Après la formation de la bague, on défonce le fond radial de la coupelle pour former un rebord radial et on confère audit rebord sa forme définitive.

On obtient ainsi une bague du type précité en un nombre réduit d'opérations et à faible coût.

Avantageusement, ladite déformation définit sur la surface extérieure ou sur l'alésage de la partie cylindrique une surface circulaire à section axiale méridienne présentant un profil concave en forme d'arc de cercle.

Dans un mode de réalisation de l'invention, on calibre la surface extérieure de la première portion de la partie cylindrique simultanément à la formation et au calibrage de ladite déformation.

De préférence, lesdites étapes sont réalisées sur un seul poste d'une presse à emboutir.

Dans un mode de réalisation de l'invention, on prévoit une étape de préformage de la partie destinée à former le second rétreint radial.

Dans un mode de réalisation de l'invention, l'élément circulaire est une coupelle obtenue par découpe d'un flan de tôle et emboutissage formant la partie cylindrique de coupelle. Après la formation de la bague, on défonce le fond radial de la coupelle pour former un rebord radial et on confère audit rebord radial sa forme définitive.

Le dispositif d'outil pour presse d'emboutissage, selon l'invention, comprend un poinçon pourvu d'un moyen d'expansion radial capable d'entrer en contact avec l'alésage d'un élément à emboutir, un support pourvu d'une surface supérieure apte à réaliser une bonne assise et un précentrage dudit élément à emboutir, et une matrice annulaire, concentrique au poinçon et mobile axialement par rapport à ce dernier, et pourvue d'une surface de formation et calibrage d'au moins une partie de la surface extérieure dudit élément à emboutir.

Le poinçon est ainsi capable de maintenir l'élément à emboutir et la matrice annulaire de former et de calibrer un chemin de roulement.

Dans un mode de réalisation de l'invention, le poinçon (mobile axialement est pourvu d'un cône d'expansion et d'une pluralité de segments mobiles radialement.

Avantageusement, la matrice annulaire est pourvue d'une surface supplémentaire de calibrage d'une autre partie de surface extérieure de l'élément à emboutir.

La matrice annulaire est ainsi capable de calibrer l'autre partie de surface extérieure simultanément à la formation et au calibrage de ladite partie de surface extérieure.

La présente invention sera mieux comprise à l'étude de la description détaillée d'un mode de réalisation pris à titre d'exemple nullement limitatif et illustré par les dessins annexés, sur lesquels :
- la figure 1 est une demi-vue en coupe axiale d'une butée d'embrayage comprenant un roulement de butée dont la bague intérieure est obtenue conformément au procédé de l'invention;
- la figure 2 est un schéma illustrant les différentes opérations de fabrication selon un procédé de l'art antérieur;
- la figure 3 est également un schéma illustrant les différentes étapes de fabrication selon un autre procédé de l'art antérieur;
- la figure 4 est un schéma illustrant les étapes de fabrication selon le procédé de l'invention; et
- les figures 5 à 11 sont des vues en coupe axiale d'une presse d'emboutissage équipée d'un outil selon l'invention, illustrée au cours des différentes étapes de fabrication.

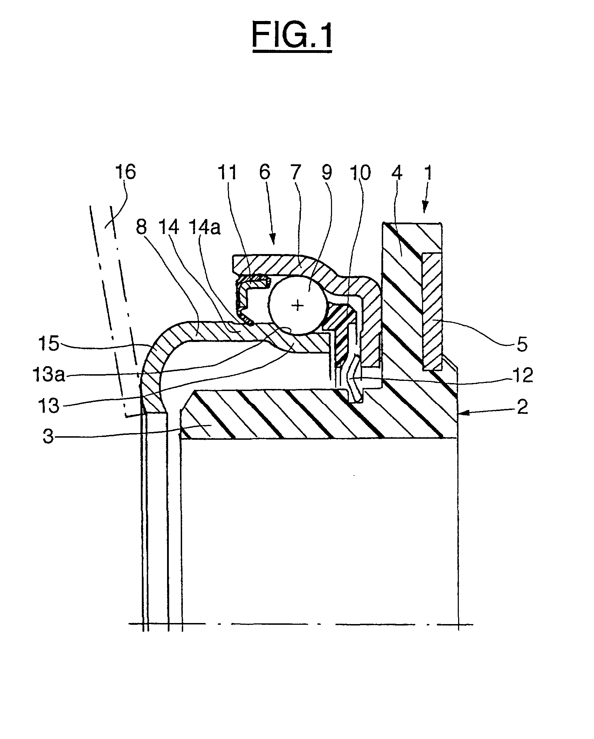

Comme on peut le voir sur la figure 1, la butée d'embrayage 1 comprend un élément de manoeuvre 2 pourvu d'une portion tubulaire 3 et d'une collerette radiale 4 qui est recouverte sur une de ses surfaces radiales d'une plaque anti-usure 5 prévue pour coopérer avec un organe de commande non représenté. L'autre face radiale de la collerette radiale 4 est en contact avec le roulement de butée 6.

Le roulement de butée 6 comprend une bague extérieure non tournante 7, une bague intérieure tournante 8, une rangée d'éléments roulants 9 sous forme de billes, une cage de maintien 10 des éléments roulants 9 et une garniture d'étanchéité 11 solidaire de la bague extérieure 7 et en contact de frottement avec la bague intérieure 8. La bague extérieure 7 est maintenue en contact avec la collerette radiale 4 au moyen d'une rondelle élastique biconique 12 solidaire de la portion tubulaire 3 de l'organe d'actionnement 2. La bague intérieure tournante 8 comprend une portion arrondie 13 dont la surface extérieure circulaire 13a présente en section axiale méridienne un profil concave en forme d'arc de cercle pour constituer un chemin de roulement pour les éléments roulants 9, une portion cylindrique 14 dont la surface extérieure 14a forme une portée de frottement pour l'organe d'étanchéité 11, et un retour radial 15 bombé vers l'extérieur et adapté pour entrer en contact avec les doigts 16 d'un diaphragme d'embrayage. La portion arrondie 13 et le retour radial 15 sont de diamètre inférieur à celui de la portion cylindrique 14.

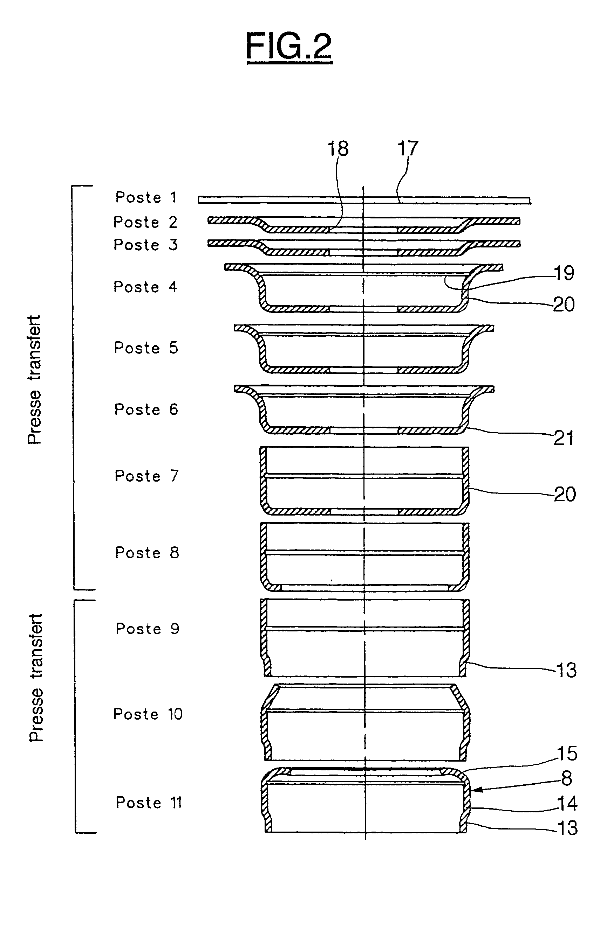

Dans l'art antérieur, une possibilité pour fabriquer une bague intérieure 8 était le procédé illustré par la figure 2. Au poste 1, on découpe un flan de tôle 17 pour former une pièce circulaire. Au poste 2, on forme un trou de centrage 18 qui sert à centrer la pièce 17 sur les postes 4 à 7 et on préforme la pièce. Au poste 3, on forme une rainure de repli 19 par estampage à plat. Au poste 4, on emboutit la pièce 17 de façon à former une portion cylindrique 20. Au poste 5, on détoure la pièce 17 pour lui conférer sur un bord ses dimensions définitives.

Au poste 6, on préforme le futur chemin de roulement en obtenant une surface torique concave 21.

Au poste 7, on met en forme et on calibre la partie cylindrique 20.

Au poste 8, on défonce le fond de la pièce aux dimensions définitives.

Au poste 9, on forme le chemin de roulement 13 à l'emplacement de la surface torique concave 21 sur la surface extérieure de la pièce 17.

Au poste 10, on préforme le futur rebord bombé de la pièce.

Au poste 11, on forme définitivement le rebord 15 de la bague 8.

Ce procédé de fabrication requérant au minimum onze opérations nécessite deux presses transfert, ce qui augmente considérablement le coût de la fabrication des bagues.

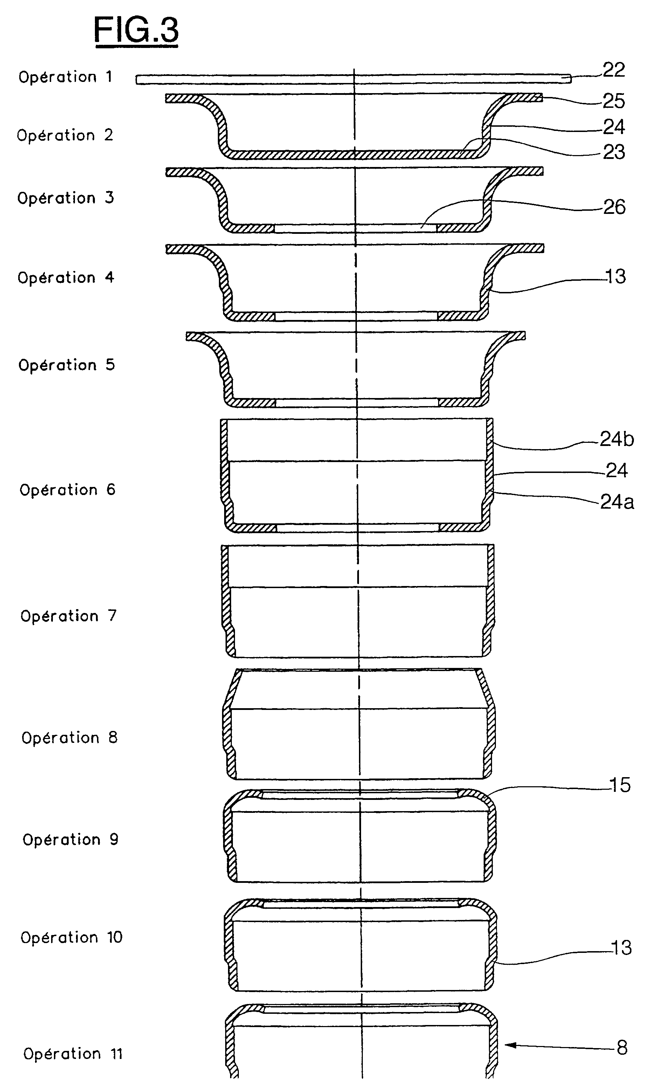

Un autre procédé de l'art antérieur est illustré sur la figure 3. Les opérations 1 à 9 sont réalisées chacune sur un poste de presse (presse transfert ou presse à poste unique). Au poste 1, on découpe un flan de tôle pour obtenir une pièce circulaire 22. Au poste 2, on emboutit la pièce 22 pour lui conférer un fond radial 23, un partie cylindrique 24 et un bord radial 25. Au poste 3, on découpe le fond 23 pour obtenir un trou de centrage 26. Au poste 4, on forme le chemin de roulement 13. Au poste 5, on détoure la pièce 22 par découpe du bord radial 25. Au poste 6, on met en forme la partie cylindrique 24 avec deux portions d'épaisseurs différentes 24a et 24b. Au poste 7, on défonce le fond radial 23. Au poste 8, on préforme le rebord bombé 15 par pliage partiel de la portion de faible épaisseur 24b. Au poste 9, on forme définitivement le rebord bombé 15. La pièce ainsi formée subit ensuite des opérations de reprise. En opération 10, on rectifie le chemin de roulement 13 et les diamètres des surfaces cylindriques extérieures adjacentes au chemin de roulement 13. En opération 11, on met à longueur définitive la bague 8 par tournage ou rectification.

Ce procédé de fabrication requiert également deux presses transfert avec les mêmes inconvénients que ceux évoqués plus haut et nécessite en outre des opérations de reprise supplémentaires.

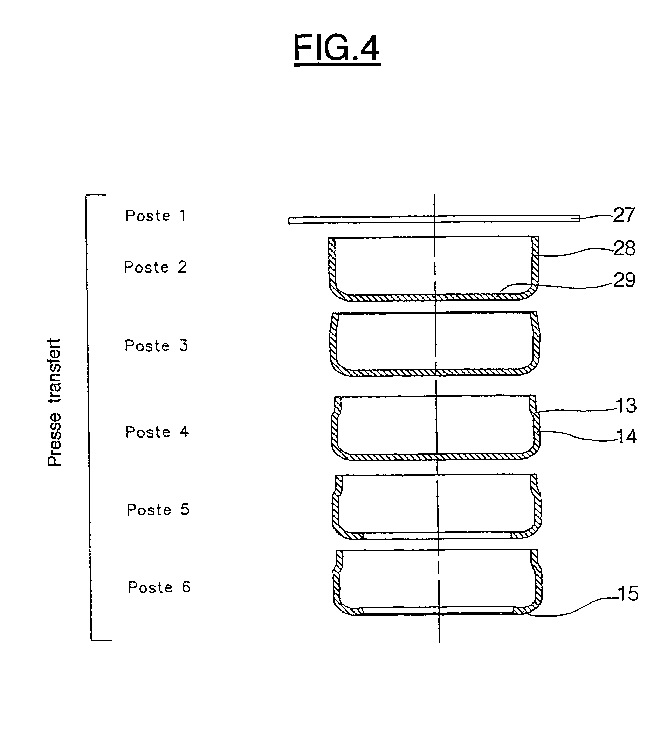

Comme on peut le voir sur la figure 4, le procédé de l'invention peut être réalisé en six postes seulement. Au poste 1, on découpe un flan de tôle pour obtenir une pièce 27 circulaire plane. Au poste 2, on emboutit la pièce 27, ce qui lui confère une forme de coupelle avec une partie cylindrique 28 et un fond radial 29. Au poste 3, on préforme la partie destinée à former le rétreint radial qui constituera le futur chemin de roulement. Pour ce faire, on réalise un léger rétreint, en forme de tronc de cône, de l'extrémité libre de la partie cylindrique. Au poste 4, on forme le chemin de roulement 13 et on calibre la surface extérieure de la partie cylindrique 14. Au poste 5, on défonce le fond radial 29 aux dimensions du futur rebord bombé. Au poste 6, on forme le rebord bombé 15.

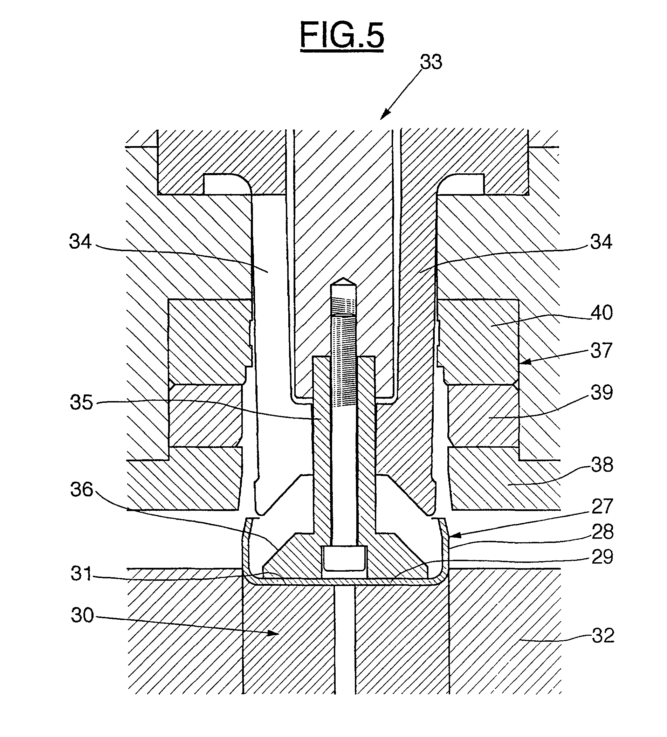

L'outil pour presse à emboutir utilisé au poste 4 est représenté sur les figures 5 à 11. L'outil comprend un support 30 pourvue d'une surface supérieure 31 en concordance de forme avec la pièce 27, en forme de coupelle afin de réaliser une bonne assise et un précentrage de cette dernière. Le support 30 comprend également un élément latéral 32 qui sert à positionner axialement les outils de calibrage en fin de course. L'outil comprend également un poinçon 33 mobile axialement et pourvu d'une pluralité de segments radialement mobiles 34 et un élément central 35 pourvu d'un cône d'expansion 36. Le fond radial 29 de la pièce 27 est maintenu entre l'élément central 35 du poinçon 33 et la surface supérieure 31 du support 30. Autour du poinçon 33 et concentriquement à celui-ci, est prévue une matrice de calibrage 37 mobile axialement par rapport au support 30 et au poinçon 33 et comprenant trois éléments annulaires superposés 38, 39 et 40. Le poinçon 33 et la matrice de calibrage 37 sont disposés au-dessus de la pièce 27.

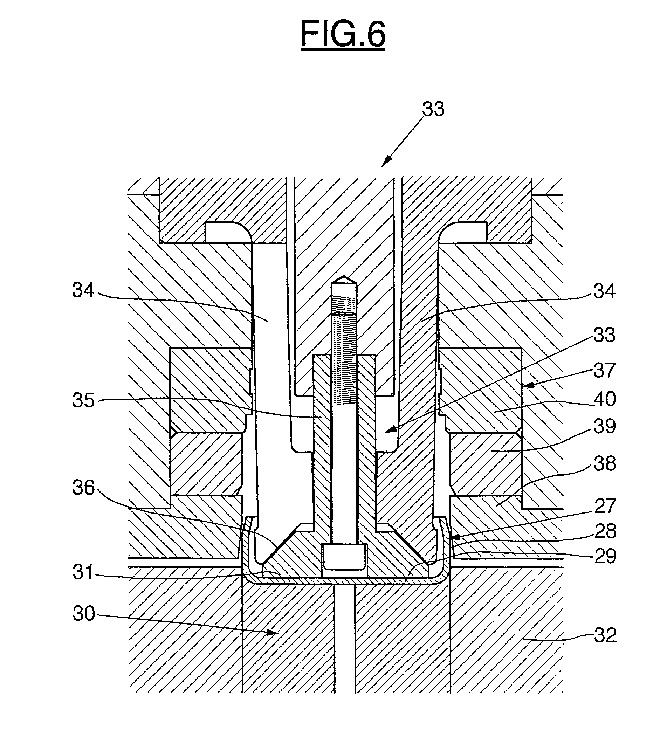

A l'étape suivante (figure 6), les segments mobiles 34 du poinçon 33 descendent et viennent en contact avec le cône d'expansion 36. La matrice de calibrage 37 descend également et vient en contact avec l'élément latéral 32 du support 30 et l'élément 38 descend coiffer la surface extérieure de la pièce 27.

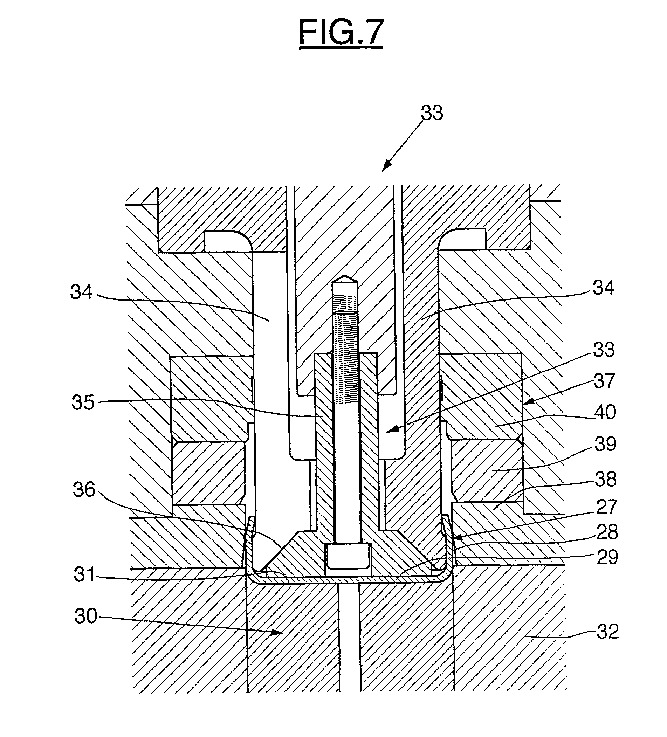

A l'étape suivante (figure 7), les segments mobiles 34 du poinçon 33 continuent à descendre ce qui provoque leur expansion radiale en raison de leur contact avec le cône d'expansion 36. En fin de course, les segments mobiles 34 entrent en contact avec l'alésage de la partie cylindrique 28 de la pièce 27.

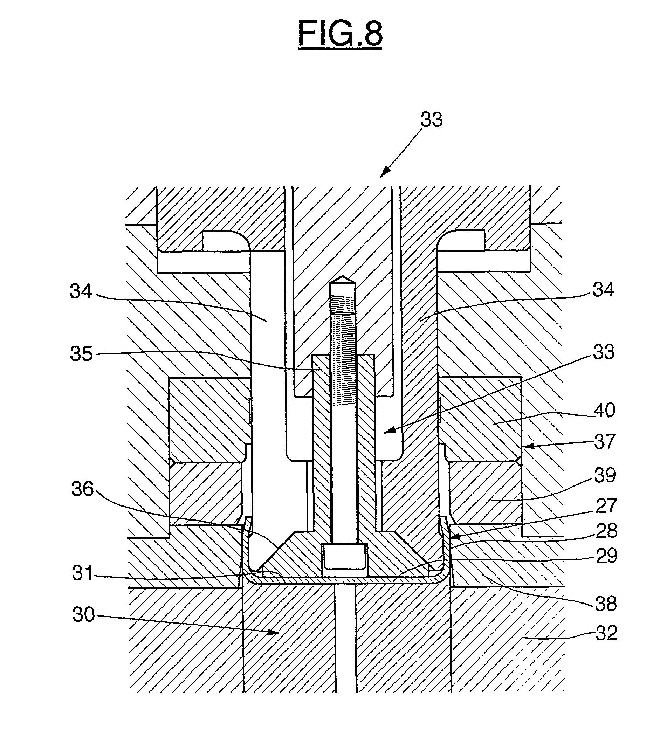

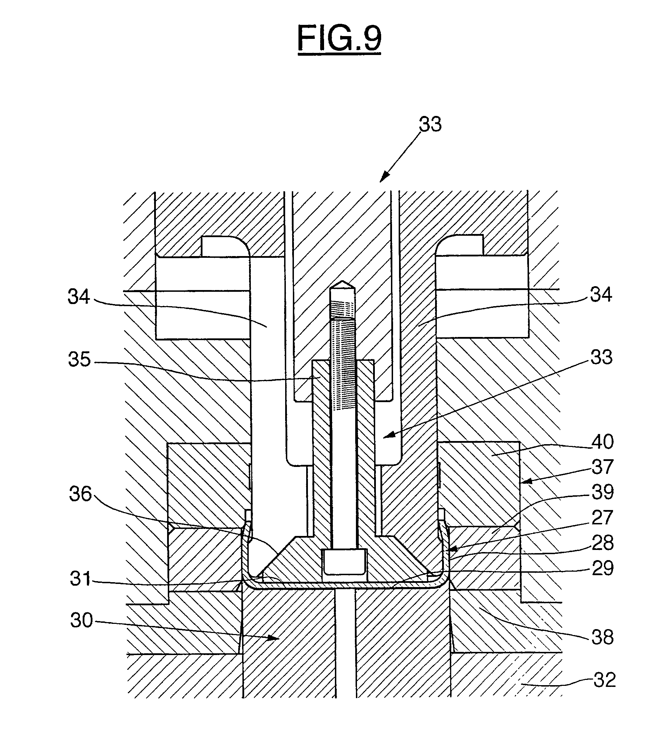

Comme on peut le voir sur la figure 8, la matrice de calibrage 37 descend en entraînant axialement l'élément latéral 32 du support 30. L'élément 38 vient centrer la partie cylindrique 28 de la pièce 27 avant le calibrage final. La matrice de calibrage 37 poursuit sa descente (figure 9). L'élément 39 calibre la partie cylindrique 28 de la pièce 27 et l'élément 40 entre en contact avec l'extrémité libre de cette partie cylindrique 28.

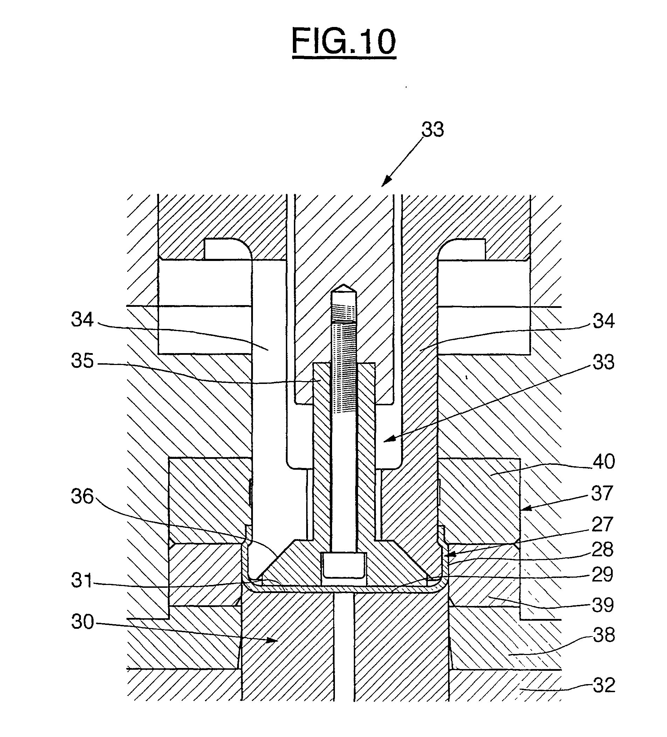

Sur la figure 10, la matrice de calibrage 37 poursuit sa descente, l'élément 40 venant former et calibrer le chemin de roulement circulaire 13 lui donnant, en section axiale méridienne, son profil concave en forme d'arc de cercle.

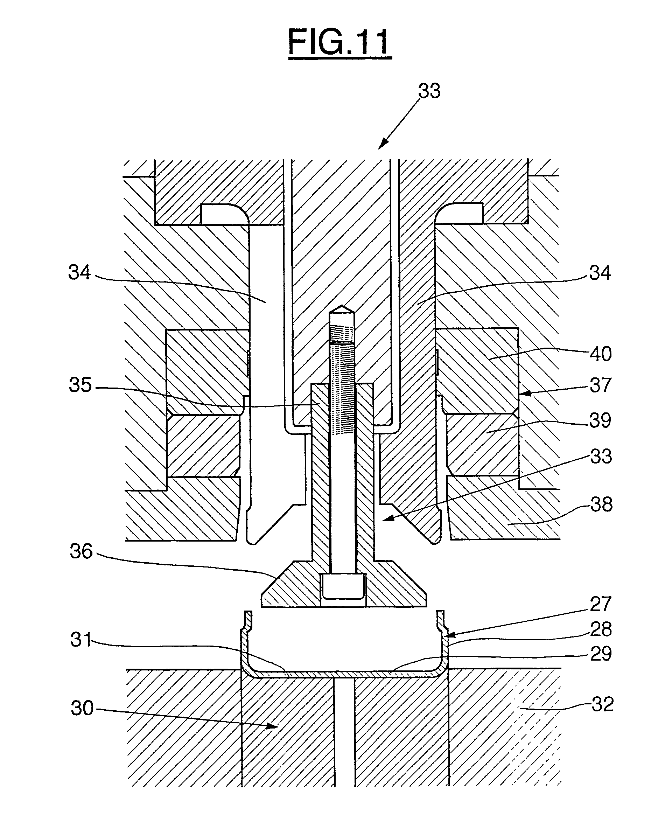

La matrice de calibrage 37 puis le poinçon 33 effectuent alors un mouvement de remontée, ce qui provoque la rétraction radiale des segments mobiles 34. Puis l'élément central 35 du poinçon 33 suit également le mouvement de remontée (figure 11), ce qui dégage complètement la pièce 27 en vue de son transfert aux deux derniers postes. Lors de l'opération de rétreint pratiquée par la matrice de calibrage 37, les segments 34 du poinçon 33 assurent la cylindricité parfaite de la pièce 27, ce qui permet de finir le chemin de roulement 13 par un simple rodage sans rectification préalable. L'absence de soutien intérieur entraînerait au contraire une non conformité géométrique nécessitant l'utilisation d'un feuillard de tôle plus épais et des usinages de reprise supplémentaires.

Le procédé suivant l'invention permet donc de réduire les coûts liés aux outillages grâce à la réduction du nombre d'opérations, de réduire les temps de montage et de réglage des presses grâce à la réduction du nombre d'outils et l'utilisation d'une seule presse transfert, de supprimer les opérations de reprise d'usinage, de réduire le temps global de fabrication, de réduire les rebuts de fabrication grâce à une meilleure géométrie des pièces, et d'optimiser l'épaisseur de tôle, donc d'effectuer un gain de matière.

Un tel procédé peut bien entendu être utilisé pour former des bagues ayant des formes différentes, par exemple le rebord bombé convexe vers l'extérieur pourrait avoir une forme concave vers l'extérieur ou une forme plane. Dans ce dernier cas, on pourrait alors réaliser la pièce en cinq opérations seulement en utilisant le processus de fabrication suivant l'invention.

Au sens de la présente invention, on entend par rétreint, une portion de bague de diamètre intérieur inférieur aux portions axialement adjacentes, par exemple repliée vers l'intérieur.

## Revendications

1. Procédé de fabrication d'une bague (8), du type destinée à un palier à roulement, comprenant deux rétreints radiaux (13, 15) axialement décalés, à partir d'un élément circulaire comprenant une partie cylindrique (28), un fond radial (29) et une partie destinée à former le second rétreint radial, comprenant les étapes suivantes :
- on maintient le fond radial (29),
- - on maintient à l'aide d'un outil radialement expansible l'alésage de la partie cylindrique (28),
- on forme et on calibre sur la surface extérieure de la partie destinée à former le second rétreint radial (13), une déformation radialement vers l'intérieur, et
après la formation de la bague, on défonce le fond radial (29) de la coupelle pour former un rebord radial et on confère audit rebord radial (15) sa forme définitive.

2. Procédé selon la revendication 1, par le fait.que ladite déformation définit sur la surface extérieure ou sur l'alésage de la partie cylindrique (28) une surface circulaire présentant en section axiale méridienne un profil concave en forme d'arc de cercle.

3. Procédé selon la revendication 1 ou 2, **caractérisé par le fait qu'**on calibre la surface extérieure de la partie cylindrique (28) simultanément à la formation et au calibrage de ladite déformation.

4. Procédé selon l'une quelconque des revendications précédentes, **caractérisé par le fait que** lesdites étapes sont réalisées sur un seul poste d'une presse à emboutir.

5. Procédé selon l'une quelconque des revendications précédentes, **caractérisé par** une étape de préformage de la partie destinée à former le second rétreint radial (13).

6. Procédé selon l'une quelconque des revendications précédentes, **caractérisé par le fait que** l'élément circulaire est une coupelle obtenue par découpe d'un flan de tôle (27) et emboutissage formant la partie cylindrique (28) de coupelle.

7. Dispositif d'outil pour presse d'emboutissage, ce dispositif comprenant un poinçon (33) mobile axialement et pourvu d'un moyen d'expansion radial (36) capable d'entrer en contact avec l'alésage d'un élément à emboutir, un support (30) pourvu d'une surface supérieure (31) pour réaliser une bonne assise et un précentrage dudit élément à emboutir, et une matrice annulaire (37), mobile axialement par rapport au poinçon (33), et pourvue d'une surface de centrage, de formation et de calibrage d'au moins une partie de la surface extérieure dudit élément à emboutir.

8. Dispositif selon la revendication 7, **caractérisé par le fait que** le poinçon est pourvu d'un cône d'expansion (36) et d'une pluralité de segments (34) mobiles radialement sous l'action du cône d'expansion.

9. Dispositif selon la revendication 7 ou 8, **caractérisé par le fait que** la matrice annulaire (37) est pourvue d'une surface supplémentaire de calibrage d'une autre partie de surface extérieure de l'élément à emboutir.

## Patentansprüche

1. Verfahren zur Herstellung eines Ringes (8) einer für ein Wälzlager vorgesehenen Art mit zwei in axialer Richtung zueinander versetzten radialen Verjüngungen (13, 15) aus einem kreisförmigen Element, das einen zylindrischen Abschnitt (28), einen radialen Boden (29) und einen Abschnitt aufweist, der dazu bestimmt ist, die zweite radiale Verjüngung zu bilden, wobei zu dem Verfahren die folgenden Schritte gehören:
- der radiale Boden (29) wird festgehalten,
- mittels eines in radialer Richtung aufweitbaren Werkzeugs wird die Zylinderbohrung des zylindrischen Abschnitts (28) gehalten,
- auf der Außenfläche des Abschnitts, der dazu vorgesehen ist, die zweite radiale Ausnehmung (13) zu bilden, wird eine radial nach innen gerichteten Verformung ausgebildet und kalibriert, und
nach der Bildung des Ringes wird der radiale Boden (29) der Schale durchlocht, um einen radialen Ringrand zu bilden, und es wird dem radialen Ringrand (15) seine endgültige Form gegeben.

2. Verfahren nach Anspruch 1, **dadurch gekennzeichnet, dass** die Verformung auf der Außenfläche oder in der Zylinderbohrung des zylindrischen Abschnitts (28) eine kreisförmige Fläche erzeugt, die im mittigen Längsschnitt ein konkaves Profil in Form eines Kreisbogens aufweist.

3. Verfahren nach Anspruch 1 oder 2, **dadurch gekennzeichnet, dass** die Kalibrierung der Außenfläche des zylindrischen Abschnitts (28) gleichzeitig mit der Bildung und der Kalibrierung der besagten Verformung erfolgt.

4. Verfahren nach einem der vorhergehenden Ansprüche, **dadurch gekennzeichnet, dass** die genannten Schritte in einer einzigen Stufe einer Umformpresse durchgeführt werden.

5. Verfahren nach einem der vorhergehenden Ansprüche, **gekennzeichnet durch** einen Schritt des Vorformens des Abschnitts, der dazu bestimmt ist, die zweite radiale Verjüngung (13) zu bilden.

6. Verfahren nach einem der vorhergehenden Ansprüche, **dadurch gekennzeichnet, dass** das kreisförmige Element eine Schale ist, die durch Stanzen einer Blechscheibe (27) und durch Umformen, wodurch der zylindrische Abschnitt (28) der Schale ausgebildet wird, erzeugt wird.

7. Werkzeugvorrichtung für eine Umformpresse, wobei zu der Vorrichtung gehören: ein Stempel (33), der in axialer Richtung verschiebbar und mit einem Mittel (36) zur radialen Ausweitung versehen ist, das in der Lage ist, mit der Zylinderbohrung eines umzuformenden Elements in Berührung zu kommen, ein Träger (30), der mit einer Oberseite (31) versehen ist, um eine geeignete Auflagefläche für das umzuformende Element sowie dessen Vorzentrierung zu schaffen, und eine ringförmige Matrize (37), die in Bezug auf den Stempel (33) in axialer Richtung verschiebbar und mit einer Fläche zum Zentrieren, Formen und Kalibrieren wenigstens eines Abschnitts der Außenfläche des umzuformenden Elements versehen ist.

8. Vorrichtung nach Anspruch 7, **dadurch gekennzeichnet, dass** der Stempel mit einem Aufweitungskonus (36) und einer Vielzahl von Segmenten (34) ausgestattet ist, die unter der Wirkung des Aufweitungskonus (36) in radialer Richtung verschiebbar sind.

9. Vorrichtung nach Anspruch 7 oder 8, **dadurch gekennzeichnet, dass** die ringförmige Matrize (37) mit einer zusätzlichen Fläche für die Kalibrierung eines weiteren Abschnitts der Außenfläche des umzuformenden Elements versehen ist.

## Claims

1. Method of manufacturing a race ring (8) of the type intended for a rolling bearing, comprising two radial necks (13, 15), axially offset, from a circular element comprising a cylindrical part (28), a radial end wall (29) and a part intended to form the second radial neck, comprising the following steps:
- the radial end wall (29) is held,
- the bore of the cylindrical part (28) is held using a radially expanding tool,
- a deformation is formed radially inwards and sized on the exterior surface of the part intended to form the second radial neck (13), and
after the race ring has been formed, the radial end wall (29) of the cup is pushed in to form a radial rim and the said radial rim (15) is given its definitive shape.

2. Method according to Claim 1, **characterized in that** the said deformation defines, on the exterior surface or on the bore of the cylindrical part (28), a circular surface which in meridian axial cross section has a concave profile in the shape of a circular arc.

3. Method according to Claim 1 or 2, **characterized in that** the exterior surface of the cylindrical part (28) is sized at the same time as the said deformation is formed and sized.

4. Method according to any one of the preceding claims, **characterized in that** the said steps are carried out on one single station of a drawing press.

5. Method according to any one of the preceding claims, **characterized by** a step of pre-forming the part intended to form the second radial neck (13).

6. Method according to any one of the preceding claims, **characterized in that** the circular element is a cup obtained by cutting out a sheet metal blank (27) and drawing to form the cylindrical part (28) of the cup.

7. Tool arrangement for a drawing press, this arrangement comprises a punch (33) that can move axially and is provided with a means of radial expansion (36) capable of coming into contact with the bore of an element which is to be drawn, a support (30) provided with an upper surface (31) to correctly seat and pre-centre the said element that is to be drawn, and an annular die (37) that can move axially with respect to the punch (33) and is provided with a surface for centring, forming and sizing at least one part of the exterior surface of the said element that is to be drawn.

8. Arrangement according to Claim 7, **characterized in that** the punch is provided with an expansion cone (36) and with a number of segments (34) able to move radially under the action of the expansion cone.

9. Arrangement according to Claim 7 or 8, **characterized in that** the annular die (37) is provided with an additional surface for sizing another exterior surface part of the element that is to be drawn.
